**Europäisches Patentamt**

**European Patent Office**

**Office européen des brevets**

(19)

(11) Publication number : **0 355 482 B1**

# (12) EUROPEAN PATENT SPECIFICATION

(45) Date of publication of patent specification :
**07.10.92 Bulletin 92/41**

(51) Int. Cl.⁵ : **B60H 1/00,** G05G 1/28

(21) Application number : **89114096.4**

(22) Date of filing : **31.07.89**

(54) **A control panel for a vehicle airconditioning system.**

(30) Priority : **05.08.88 IT 5335088 U**

(43) Date of publication of application :
**28.02.90 Bulletin 90/09**

(45) Publication of the grant of the patent :
**07.10.92 Bulletin 92/41**

(84) Designated Contracting States :
**DE ES FR GB SE**

(56) References cited :
**DE-A- 1 580 098
US-A- 4 104 981**

(56) References cited :
**PATENT ABSTRACTS OF JAPAN, vol. 8, no.
227 (M-332)[1664], 18th October 1984; & JP-
A-59 109 415 (NISSAN JIDOSHA K.K.)25-
06-1984
PATENT ABSTRACTS OF JAPAN, vol. 8, no. 94
(M-293)[1531], 28th April 1984; & JP-A-59 8520
(NISSAN JIDOSHA K.K.) 17-01-1984**

(73) Proprietor : **BORLETTI CLIMATIZZAZIONE
S.r.l.
Frazione Masio, 24
I-10046 Poirino (Torino) (IT)**

(72) Inventor : **Monasterolo, Teobaldo
Via degli Alteni, 12
I-10046 Poirino (Torino) (IT)**

(74) Representative : **Buzzi, Franco et al
c/o Jacobacci-Casetta & Perani S.p.A. Via
Alfieri, 17
I-10121 Torino (IT)**

EP 0 355 482 B1

# Description

The present invention relates to a control panel for a vehicle, particularly for controlling the air-conditioning system of a vehicle.

In particular, the invention relates to a panel of the type comprising a transparent light-transmitting element interposed between a rear screen and a front screen which is provided with light-permeable regions for defining symbols or signs on the panel, and control means which can slide in suitable slots in the panel.

In known control panels of the above-mentioned type, unlike the signs or symbols on the panel which are easily visible (for example for indicating the direction of the air flow, the heating intensity, or the rate of rotation of the electric fan), the positions of the control means, which are normally constituted by sliders, are not displayed in darkness, with the consequent need for the driver to search for the positions of the sliders "by touch".

It has already been proposed to render visible the position of the control lever of an air-conditioning control panel. JP-A-59 109 415 shows a control panel comprising a first prismform photoconductive body fixed to the back of the panel and extending parallel to an elongated groove in which a control lever can slide. A second prismform photoconductive body is fixed to the control lever and is adapted to collect light emitted by the first photoconductive body and to reflect the light on a back portion of the panel in order to show the position of the control lever. This solution is expensive due to the two photoconductive bodies which are necessary to illuminate the position of the control lever. Furthermore, in this panel what is illuminated is not the control lever, but the portion of the panel in correspondence of which the control lever is located; therefore the visualisation of the control lever is not very effective.

Another solution to illuminate the control lever is known from JP-A-59 8520. This document shows a control lever whose head projects outside the panel and is illuminated by a light source which is carried by an arm of the lever located inside the panel. The light source illuminates both the head of the control lever and the portion of the panel in correspondence of which the lever is located. Also this solution is unsatisfactory because a second light source would be necessary to illuminate the whole panel in order to render visible all the symbols and signs provided thereon.

The object of the present invention is to provide a panel of the type specified at the beginning of the description which does not have the above disadvantages and which is simple and cheap to produce.

According to the invention, this object is achieved by a control panel according to Claim 1.

Further advantages and characteristics of a control panel according to the invention will become clear from the detailed description which follows, provided purely by way of non-limiting example, with reference to the appended drawings, in which:

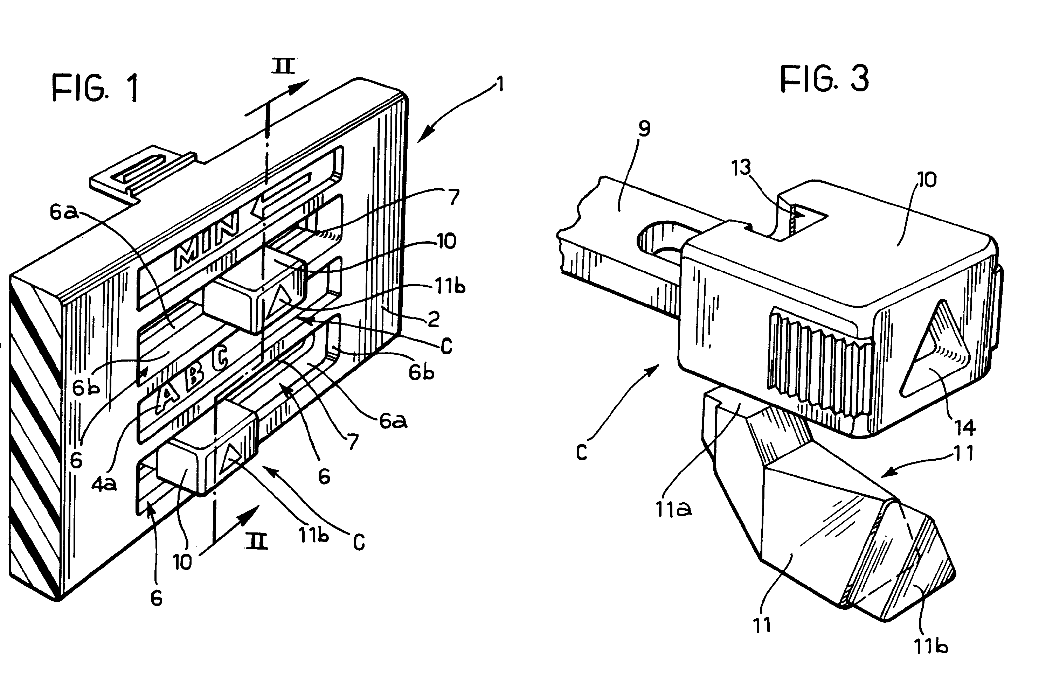

Figure 1 is a perspective view of a control panel according to the invention,

Figure 2 is a section taken on the line II-II of Figure 1, and

Figure 3 is an exploded perspective view of a detail of Figure 1.

With reference to the drawings, a control panel for the air-conditioning system of a motor vehicle is generally indicated 1 and includes a body 2 of plastics material for connection to the dashboard of the vehicle (not illustrated). A sheet 3 of transparent plastics material is connected within the body 2 and is interposed between a mask 4 and a rear screen 5 with apertures (not shown) for the passage of light from suitable sources. The mask 4 has, in known manner, light-permeable regions 4a, which may be coloured, situated in correspondence with apertures 2a in the front of the body 2 of the panel for defining symbols or signs for illustrating the functions of the panel.

The body 2 also has straight recessed frontal portions 6 each with a base wall 6a formed with a straight slot 7 and side walls 6b. One of the walls 6b has an auxiliary slot 8 from which an edge B of the transparent element 3 projects so as to illuminate the slot 7 and the recessed portion 6 of the body 2.

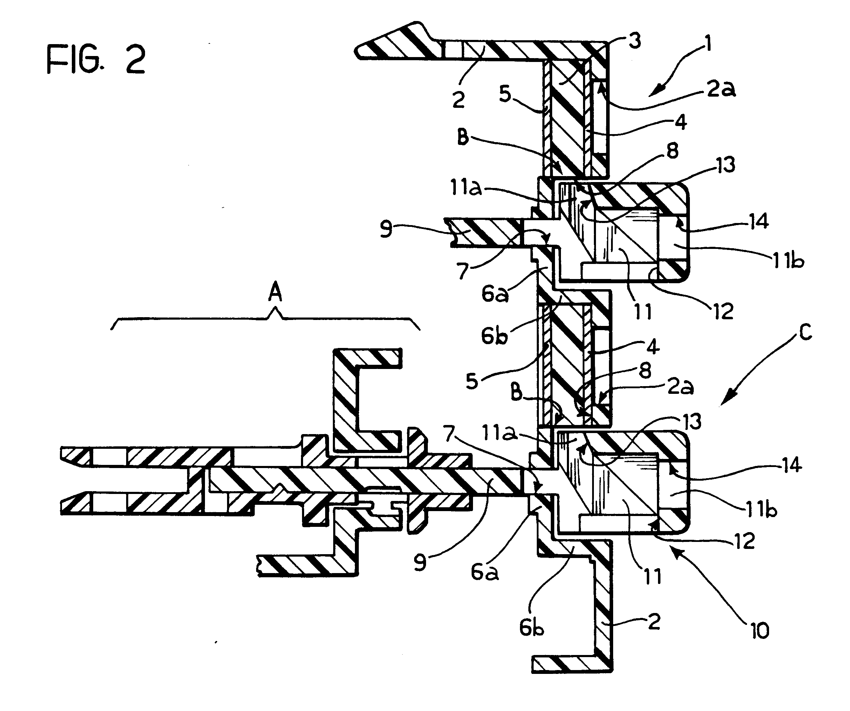

The shaft 9 of a control slider C is slidable in each slot 7 and has a hollow operating end 10 of substantially parallelepidal shape. The shaft 9 of the slider C is connected, in known manner, to means for connection to the actuators of the air-conditioning system, indicated A in Figure 2. The end 10 of each slider C houses a prism 11 of transparent plastics material inserted in a lower aperture 12 in the end 10 and having a first portion 11a, which projects through a side aperture 13 in the operating end, and a second portion 11b which projects through a front aperture 14 in the slider shaped like a triangular arrow.

The first portion 11a of the prism 11 faces the respective edge B of the light-transmitting transparent element (3) so as to convey some of the light emerging from the edge to the portion 11b which is situated at the front of the slider.

When the passenger compartment is in darkness, the transparent element 3 serves both to illuminate the symbol or sign-shaped transparent regions 4a, and to provide illumination in the form of a flat beam of light to the recessed portion 6 in which the slider C slides and to the operating end 10 of the slider itself.

The shape of the prism 11 is such that light entering the portion 11a is totally reflected by the flat side surfaces of the prism so that all of it is conveyed to the portion 11b which is fitted in the front aperture 14 in the end 10 of the slider.

## Claims

1. A control panel (2) for vehicles, particularly for controlling the air-conditioning system of a vehicle, of the type comprising:

   – a transparent substantially vertical light-transmitting element (3) interposed between a rear screen (5) and a front screen (4) which is provided with light-permeable regions (2a, 4a) for defining symbols or signs on the panel, and

   – control means (C, A) which can slide in suitable slots (7) in the panel (2),

   characterised in that at least one of the slots (7) has a side region (8) which faces a corresponding edge (B) of the transparent element (3) so that the slot (6, 7) is illuminated substantially throughout its length, and in that the control means comprise sliders (C) with hollow operating ends (10) which project from the respective slots (7) in the panel (2), each hollow operating end (10) housing a prismatic element (11) of transparent material which is adapted to convey light from the edge (B) of the transparent element (3) to a front surface region (11b) of the operating end (10) of the slider (C).

2. A panel according to Claim 1, characterised in that the hollow operating end (10) of the slider (C) has a side aperture (13) from which a first portion (11a) of the prismatic element projects so as to face the edge (B) of the transparent element (3) and a front aperture (14) from which a second portion (11b) of the prismatic element (11) projects.

## Patentansprüche

1. Bedienungstafel (2) für Fahrzeuge, insbesondere zum Bedienen der Klimaanlage eines Fahrzeuges, umfassend:

   – ein transparentes, im wesentlichen vertikales lichtübertragendes Element (3), welches zwischen einem hinteren Schirm (5) und einem vorderen Schirm (4) angeordnet ist, der mit lichtdurchlässigen Bereichen (2a, 4a) zur Bildung von Symbolen oder Zeichen auf der Tafel versehen ist, und

   – Bedienelemente (C, A), welche in geeigneten, in der Tafel (2) ausgebildeten Schlitzen (7) verschiebbar sind, dadurch **gekennzeichnet,**

   daß wenigstens einer der Schlitze (7) einen Seitenbereich (8) hat, welcher einer zugeordneten Kante (B) des transparenten Elementes (3) gegenüberliegt, so daß der Schlitz (6, 7) im wesentlichen über seine ganze Länge beleuchtet wird, und daß die Bedienelemente Schieber (C) mit hohlen Betätigungsenden (10) umfassen, die aus den zugeordneten Schlitzen (7) in der Tafel (2) vorstehen, wobei jedes hohle Betätigungsende (10) ein prismatisches Element (11) aus transparentem Material aufnimmt, welches Licht von der Kante (B) des transparenten Elementes (3) zu einem vorderen Oberflächenbereich (11b) des Betätigungsendes (10) dieses Schiebers (C) leiten kann.

2. Bedienungstafel nach Anspruch 1, dadurch gekennzeichnet, daß das hohle Betätigungsende (10) des Schiebers (C) eine Seitenöffnung (13) hat, aus der ein erster Abschnitt (11a) des prismatischen Elementes vorsteht, so daß es der Kante (B) des transparenten Elementes (3) gegenüberliegt, sowie eine Frontöffnung (14), aus der ein zweiter Abschnitt (11b) des prismatischen Elementes (11) vorsteht.

## Revendications

1. Panneau de commande (2) pour véhicules, en particulier pour commander le système de climatisation d'un véhicule, du type comportant:

   – un élément transparent (3), sensiblement vertical, transmettant la lumière et interposé entre un écran arrière (5) et un écran avant (4) qui présente des régions (2a, 4a) translucides pour définir des symboles ou des signes sur le panneau, et

   – des moyens de commande (C, A) qui peuvent coulisser dans des fentes convenables (7) prévues dans le panneau (2),

   caractérisé par le fait qu'au moins l'une des fentes (7) présente une région latérale (8) qui fait face à un bord correspondant (B) de l'élément transparent (3) de façon que la fente (6, 7) soit substantiellement éclairée sur toute sa longueur, et par le fait que les moyens de commande comportent des coulisseaux (C) dont les extrémités de manoeuvre (10), creuses, dépassent par les fentes respectives (7) prévues dans le panneau (2), chaque extrémité de manoeuvre creuse (10) logeant un élément prismatique (11) en matériau transparent conçu pour transmettre la lumière, en provenance du bord (B) de l'élément transparent (3); à une région (11b) formant la surface avant de l'extrémité de manoeuvre (10) du coulisseau (C).

2. Panneau selon la revendication 1, caractérisé par le fait que l'extrémité de manoeuvre creuse (10) du coulisseau (C) présente une ouverture latérale (13) d'où déborde une première portion (11a) de l'élément prismatique de façon à faire face au bord (B) de l'élément transparent (3), ainsi qu'une ouverture avant (14) d'où déborde une seconde portion (11b) de l'élément prismatique (11).

FIG. 3

FIG. 1

FIG. 2

EP 0 355 482 B1